(19) Europäisches Patentamt
European Patent Office
Office européen des brevets

(11) EP 0 792 322 B2

(12) NOUVEAU FASCICULE DE BREVET EUROPEEN

(45) Date de publication et mention de la décision concernant l'opposition:
**05.11.2003 Bulletin 2003/45**

(45) Mention de la délivrance du brevet:
**06.05.1999 Bulletin 1999/18**

(21) Numéro de dépôt: **95940317.1**

(22) Date de dépôt: **15.11.1995**

(51) Int Cl.[7]: **C08L 83/06**, C08L 83/08, C08G 77/392

(86) Numéro de dépôt international:
**PCT/FR95/01504**

(87) Numéro de publication internationale:
**WO 96/016125 (30.05.1996 Gazette 1996/25)**

# (54) POLYORGANOSILOXANES FONCTIONNALISES ET L'UN DE LEURS PROCEDES DE PREPARATION

FUNKTIONALISIERTE POLYORGANOSILOXANE UND VERFAHREN ZU DEREN HERSTELLUNG

FUNCTIONALISED POLYORGANOSILOXANES AND ONE METHOD FOR PREPARING SAME

(84) Etats contractants désignés:
**AT BE CH DE DK ES FR GB GR IE IT LI LU NL PT SE**

(30) Priorité: **18.11.1994 FR 9414056**

(43) Date de publication de la demande:
**03.09.1997 Bulletin 1997/36**

(73) Titulaire: **RHODIA CHIMIE**
**92408 Courbevoie Cédex (FR)**

(72) Inventeurs:
- **GAY, Michel**
  **F-69100 Villeurbanne (FR)**
- **JOST, Philippe**
  **F-69440 Taluyers (FR)**
- **PEIGNIER, Michel**
  **F-69210 Lentilly (FR)**
- **PRIOU, Christian**
  **F-69100 Villeurbanne (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 403 400**
**EP-A- 0 421 588**
**EP-A- 0 475 440**
**EP-A- 0 565 327**
**EP-A- 0 650 997**
**DE-A- 4 120 418**

EP 0 792 322 B2

## Description

Le domaine de la présente invention est celui des polyorganosiloxanes comportant plusieurs fonctionnalités apportées par des substituants du silicium et conférant aux polymères silicones des propriétés spécifiques, par exemple, d'anti-adhérence, de lubrification ou de renforcement recherchées dans les applications des silicones.
Plus précisément, la présente invention concerne un polyorganosiloxane multifonctionnalisé, dont les fonctionnalités sont portées chacune par des motifs siloxyles différents, par l'intermédiaire de liaison SiC ou SiOC.
La présente invention concerne également un procédé de fonctionnalisation de polyorganosiloxanes permettant de conduire aux polyorganosiloxanes multifonctionnalisés visés ci-dessus.
Classiquement, la fonctionnalisation des polyorganosiloxanes peut être réalisée par substitution des hydrogènes portés par les atomes de silicium de la chaine.
Selon une première voie, cette substitution peut consister en une réaction d'hydrosilylation entre un polyorganohydrogénosiloxane et un réactif oléfinique, porteur d'au moins une double liaison $\pi$ apte à réagir avec l'hydrogène selon un mécanisme d'addition. L'hydrosilylation est une réaction parfaitement connue dans le domaine technique considéré. Usuellement, cette réaction est catalysée au platine. Elle est largement décrite dans la littérature. A cet égard on peut se référer, par exemple, à l'article de V.M KOPILOV et Coll., Z. Obsh. Khim., vol. 57 (5), (1987) p. 1117-1127. Dans cette première voie, tous les atomes de silicium à hydrogène disponible sont substitués par des motifs organiques via des liaisons SiC, lesdits motifs organiques étant apportés par le ou les réactifs oléfiniques. Une illustration, parmi d'autres, de l'hydrosilylation est donnée par la demande de brevet européen N° 504 800, qui décrit l'addition d'un polyoxyalkylène substitué par un groupement oléfinique (vinylique) sur un polydiméthylhydrogénosiloxane de formule :

$$Me_3SiO—(Me_2SiO)_{157}—(MeHSiO)_{21}—SiMe_3 \text{ (Me = } CH_3\text{)},$$

en présence d'un ester monocarboxylique d'un solvant du type alcanediol. Dans ce cas, il apparaît clairement qu'un seul type de fonctionnalisation est envisageable et seuls les groupements susceptibles d'être substitués par des restes oléfiniques peuvent être greffés sur le polyorganosiloxane.
Une deuxième voie de fonctionnalisation est celle selon laquelle on substitue les siliciums du polyorganosiloxane concerné, par des restes fonctionnels liés à ce dernier grâce à des ponts SiOC. Les réactions envisageables pour ce faire sont, par exemple, celles faisant intervenir des $\alpha,\omega$-chlorosiloxanes et des alcools ou bien encore des polyorganohydrogénosiloxanes et des alcools selon un mécanisme de déshydrogénocondensation.
Ces réactions de déshydrogénocondensation, qualifiées également d'alcoolyses d'organohydrogénopolysiloxanes, sont décrites notamment dans S.KOAMA et Y HUMEKI. Journal of Applied Polymere Science Vol.21 (277), pages 863-867.
Cet article fait référence à des polyméthylhydrogénosiloxanes mis en présence d'alcool du type méthanol ou éthanol et d'un catalyseur choisi parmi les bases et certains chlorures métalliques (acides de Lewis). Le solvant mis en oeuvre est le benzène. Les auteurs obtiennent ainsi un polyalcoxyméthylsiloxane doué lui aussi d'une seule fonctionnalité.
On a également recours à la déshydrogénocondensation dans l'invention décrite par le brevet US N° 5 310 842 relatif à des polyorganosiloxanes alcoxysubstitués. Ces produits peuvent être multifonctionnalisés et comportent d'une part des motifs siloxyles, situés dans la chaîne ou en bouts de chaîne, équipés de fonction alcoxy supérieur ayant de 4 à 30 atomes de carbone et d'autre part des motifs siloxyles, situés aussi dans la chaîne ou en bouts de chaîne, équipés de radicaux hydrocarbonés pouvant représenter chacun un reste fonctionnel consistant dans un groupe alkyle ayant une condensation en carbone élevée pouvant atteindre $C_{15}$ ou dans un groupe alkényle en $C_2$ - $C_{15}$ comportant une double liaison ; de pareils polyorganosiloxane linéaires multifonctionnalisés sont exclus de la portée de la présente invention. Le catalyseur mis en oeuvre dans cette déshydrogénocondensation est de nature platinique (acide chloroplatinique). Toutes les fonctions méthylhydrogénosiloxyles de départ sont transformées (taux de conversion supérieur à 99 %) en motifs siloxyles substitués. Les chaînes alcoxylées latérales interviennent dans la compatibilisation des polyorganosiloxanes avec d'autres produits comme, par exemple des polymères organiques, avec lesquels ils sont mis en oeuvre dans les applications finales. Bien que les auteurs prétendent que ces polyorganosiloxanes alcoxylés présentent une bonne résistance à l'hydrolyse, il peut être permis d'en douter, compte tenu de la sensibilité non négligeable du pont oxygène à cet égard.
Cette revue de l'art antérieur fait apparaître que des polyorganosiloxanes multifonctionnalisés ne sont pas très nombreux. De tels produits seraient pourtant fort appréciables dans certaines des utilisations des silicones, car il est évident que la multifonctionnalisation ne fait qu'accroître les potentialités de ces produits, déja très performants. L'apport de fonctionnalités multiples par greffage procurerait également l'avantage indéniable, de pouvoir construire des silicones sur mesure, spécifiquement adaptés aux applications visées.

Dans cet état de fait, l'un des objectifs essentiel de la présente invention est de fournir un polyorganosiloxane fonctionnalisé, en particulier multifonctionnalisé et plus particulièrement encore comprenant au moins deux sites (ou motifs) siloxyles de fonctionnalisation différents, porteur chacun d'un type de fonctionnalité, correspondant à une pluralité d'espèces fonctionnelles.

Un autre objectif essentiel de l'invention est de fournir un polyorganosiloxane obtenable de manière simple et économique.

Un autre objectif essentiel de l'invention est de fournir un procédé de préparation de polyorganosiloxanes présentant simultanément plusieurs types de fonctions apportées par greffage, en particulier deux types de fonctions, ledit procédé se devant d'être aisé à mettre en oeuvre et d'un coût de revient faible, tant sur le plan des matières premières employées que sur le plan des moyens matériels, de l'énergie et du temps nécessaires.

C'est en cherchant à satisfaire ces objectifs, que la Demanderesse a découvert de manière tout à fait surprenante et inattendue, après de nombreuses études et expérimentations, que contrairement à ce qu'enseignent KOAMA et HUMEKI, l'alcoolyse de polyméthylhydrogénosiloxanes, conduit dans certaines conditions, à des motifs siloxyles alcoxysubstitués et à des motifs hydrogénosiloxyles dont l'hydrogène n'a pas réagi, selon une stoechiométrie particulière.

Il s'ensuit que la présente invention, qui permet d'atteindre les susdits objectifs parmi d'autres, concerne, à titre de produit nouveau *per se*, un polyorganosiloxane fonctionnalisé, et plus particulièrement multifonctionnalisé, constitué par molécule,

- $\alpha$ - d'une part d' au moins un motif siloxyle fonctionnel de formule :

$$(I) \qquad (R)_a\ Y\ Si\ (O)_{\frac{3-a}{2}}$$

dans laquelle

* a = 0, 1 ou 2
* R est un radical hydrocarboné monovalent choisi parmi les alkyles linéaires ou ramifiés, ayant de 1 à 6 atomes en particulier le méthyle, l'éthyle, le propyle le butyle et/ou parmi les aryles et en particulier le phényle, le méthyle étant plus particulièrement préféré, les radicaux R étant identiques ou différents quand a = 2,
* Y est un radical alcoxyle linéaire ou ramifié choisi parmi les radicaux méthoxyle, éthoxyle et/ou (iso)propoxyle,

- $\beta$ - et d'autre part, d'au moins un motif siloxyle fonctionnel de formule :

$$(II) \qquad (R)_b\ W\ Si(O)_{\frac{3-b}{2}}$$

dans laquelle

* b = 0, 1 ou 2,
* R répond à la même définition que celle donnée supra pour le substituant R du motif (I) et peut être identique ou différent de ce dernier,
* W est un radical hydrocarboné monovalent ayant de 2 à 30 atomes de carbone constituant un reste fonctionnel, relié au silicium par une liaison Si-C,

ce reste étant choisi parmi les groupes suivants :

(i) un groupe alkyle, linéaire ou ramifié, comprenant au moins 7 atomes de carbone,
(2i) un groupe alkényle en $C_2$-$C_{20}$, linéaire ou ramifié, comportant une ou plusieurs doubles liaisons dans la (ou les) et/ou en extrémité(s) de chaîne(s), lesdites doubles liaisons éventuellement conjuguées,
(3i) un groupe mono ou bicyclique aliphatique insaturé comportant 5 à 20 atomes de carbone cycliques et une ou deux double(s) liaison(s) éthyléniques dans le cycle éventuellement substituée(s) par un ou deux groupe(s) alkyle (s) linéaire(s) ou ramifiée(s) en $C_1$-$C_3$, ledit groupe cyclique étant éventuellement relié au silicium par l'intermédiaire d'un radical alkylène, linéaire ou ramifié en $C_2$-$C_{10}$,

- $\gamma$ - et éventuellement d'au moins un motif siloxyle (**III**) de formule suivante :

$$(R)_c(H)_dSi(O)_{\frac{4-(c+d)}{2}} \qquad (III)$$

dans laquelle

* c = 0, 1, 2 ou 3, d = 0 ou 1 et $c + d \leq 3$
* les substituants R étant tels que définis ci-dessus dans les motifs (**I**) et (**II**).

A la connaissance de la Demanderesse, aucun document de l'art antérieur ne décrit des polyorganosiloxanes présentant, à la fois des motifs fonctionnalisés par un reste fonctionnel relié au silicium par une liaison SiOC et des motifs siloxyles fonctionnalisés par un reste fonctionnel relié au silicium par une liaison SiC.
Dans ce polyorganosiloxane selon l'invention, la première fonctionnalité Y alcoxyle est portée par les motifs de formule (I) tandis que la deuxième fonctionnalité W hydrocarboné apparaît dans les motifs de formule (II) définis ci-dessus.
Selon une terminologie usuelle dans les silicones, ces motifs (I) et (II) peuvent être des motifs M,D mais également T. La présence de motifs T correspond à une variante dans laquelle les polyorganosiloxanes se présentent sous forme de chaînes linéaires réticulées entre elles.
Les fonctions Y sont caractérisées en ce qu'elles sont hydrolysables et qu'elles peuvent donc permettre le greffage sur différents supports, ce qui peut être particulièrement intéressant dans certaines applications.
W peut être constitué par une fonction hydrocarbonnée, plus difficilement hydrolysable et susceptible d'exprimer diverses propriétés en fonction de sa nature chimique. Cela peut être la compatibilisation avec des polymères organiques, ou bien encore l'apport d'une fonction de réticulation au polyorganosiloxane.
Conformément à une modalité avantageuse de l'invention, ce substituant fonctionnel W est choisi parmi les radicaux suivants :

- un radical alkyle (i) comprenant de 8 à 30 atomes de carbone et choisi de préférence parmi les radicaux alkyles suivants : octyle, dodécyle, undécyle, tridécyle ;
- un radical (2i) en $C_6$-$C_{10}$, comportant une double liaison, et éventuellement une autre conjuguée à la première, ledit radical étant avantageusement l'hexènyle ou le dodécènyle ;
- un radical (3i) monocyclique en $C_5$-$C_6$, de préférence le cyclohexènyle ou le méthyl-1 cyclohexène-1 yle, éventuellement relié au silicium par l'intermédiaire d'un radical alkylène linéaire ou ramifié en $C_2$-$C_6$, de préférence $-CH_2-CH_2-$, $-CH_2-CH(CH_3)-$, $-(CH_2)_3-$.

Comme indiqué ci-avant, l'invention n'est pas limitée au cas où le polyorganosiloxane comporte seulement deux types de fonctionnalité Y et W. En effet, selon une variante intéressante, le polyorganosiloxane comporte, outre les motifs (**I**) et (**II**), au moins un motif (**III**).
Les motifs (**III**) de type SiH sont, par exemple, des sites syloxyles résiduels dont l'hydrogène n'a pas réagi pour être substitué par Y ou W. Ce caractère hydrogéné résiduel peut s'avérer utile dans certaines applications des polyorganosiloxanes selon l'invention.
Il convient de souligner que dès lors qu'un motif d'un type donné (**I**, **II** ou **III** e.g.), est présent dans le polyorganosiloxane à plus d'un exemplaire, les différents exemplaires peuvent être identiques ou différents entre eux.
Compte tenu des valeurs que peuvent prendre les indices a à d attribués aux substituants dans les motifs (**I**), (**II**), (**III**), on doit comprendre que les polyorganosiloxanes selon l'invention peuvent présenter une structure linéaire et/ou ramifié et/ou cyclique.
Les radicaux R préférés sont : le méthyle, l'éthyle, le n-propyle, l'isopropyle ou le n-butyle, de préférence le méthyle. Plus préférentiellement encore, au moins 80 % en nombre des radicaux R sont des méthyles.
Les radicaux alcoxyles Y préférés sont les éthoxyles.
Pour être encore plus précis sur les polyorganosiloxanes concernés par l'invention, à titre de produits nouveaux, on mentionne tout d'abord ceux formés par des copolymères linéaires statistiques, séquencés ou à bloc, de formule moyenne suivante :

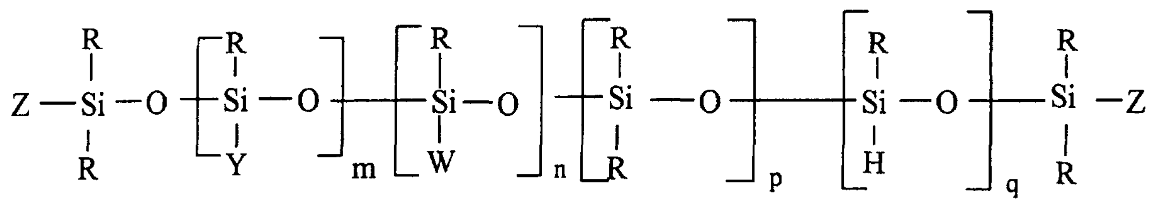

(IV)

dans laquelle :

- les symboles Y, W et R sont tels que définis supra,
- le symbole Z est un radical monovalent choisi parmi les radicaux formés par l'hydrogène et parmi ceux répondant aux définitions de R, Y et W,
- la somme $m + n + p + q \geq 3$, de préférence comprise entre 3 et 100 ; le cas de figure dans lequel $p = q = 0$, $m \geq 1$ et $n \leq 50$ étant plus particulièrement préféré,
- $0 \leq m \leq 100$, de préférence $1 \leq m \leq 50$
- $0 \leq n \leq 100$, de préférence $1 \leq n \leq 50$
- $0 \leq p \leq 20$, de préférence $0 \leq p \leq 10$
- $0 \leq q \leq 40$, de préférence $0 \leq q \leq 20$
- avec les conditions selon lesquelles :

  . si $m = 0$, au moins l'un des substituants Z correspond à un radical répondant à la définition caractérisant Y,
  . si $n = 0$, au moins l'un des substituants Z correspond à un radical répondant à la définition caractérisant W,
  . et si $m = n = 0$ et $p + q \geq 1$, alors l'un des substituants Z correspond à un radical répondant à la définition caractérisant Y et l'autre des substituants Z correspondant à la définition caractérisant W.

Parmi les polyorganosiloxanes de formule (**IV**), plus particulièrement préférés, on peut citer ceux pour lesquels $p = q = 0$ et $0{,}1 \leq m/n \leq 5$, de préférence $1 \leq m/n \leq 5$ et plus préférentiellement $1{,}5 \leq m/n \leq 3$.

Une alternative à la structure linéaire des polymères de formule (**IV**) définis ci-dessus, se rapporte aux polyorganosiloxanes constitués par des copolymères cycliques de formule moyenne suivante :

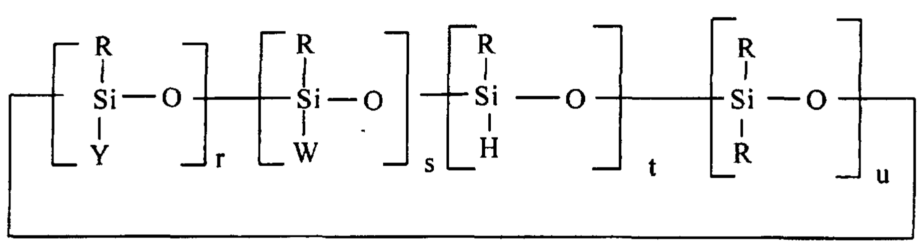

(V)

dans laquelle Y, W et R sont tels que définis supra,

et avec r, s, t et u représentant des nombres entiers ou décimaux positifs :

+ la somme $r + s + t + u \geq 3$, de préférence comprise entre 3 et 8, le cas de figure dans lequel $t = u = 0$ étant plus particulièrement préféré,

+ $1 \leq r \leq 8$, de préférence $1 \leq r \leq 4$

+ $1 \leq s \leq 8$, de préférence $1 \leq s \leq 4$

+ $0 \leq t \leq 8$, de préférence $0 \leq t \leq 4$
+ $0 \leq u \leq 8$, de préférence $0 \leq u \leq 4$.

De préférence, les polyorganosiloxanes selon l'invention sont constitués par des produits correspondants à ceux pour lesquels R = $CH_3$ et p = u = 0 dans les formules (**IV**) et (**V**) définies ci-dessus.

Il va de soi que dans ces formules (**IV**) et (**V**), comme déjà indiqué ci-dessus, les radicaux W peuvent être de nature identique ou différente quand n > 1 et s > 1.

Les mélanges de polyorganosiloxanes du type de ceux définis ci-dessus, rentrent dans le cadre de la présente invention.

Selon un autre de ses aspects, cette invention vise un procédé de préparation de polyorganosiloxanes fonctionnalisés, en particulier multifonctionnalisés, qui correspondent à ceux décrits ci-avant.

Avantageusement, ce procédé de fonctionnalisation consiste, d'une part, à faire réagir

un polyorganosiloxane de départ comprenant des motifs de formule (**II**) tels que définis supra, dans lesquels W représente l'hydrogène,

avec au moins un alcool de formule YH dont dérive la fonctionnalité Y du motif (**I**), et utile à la fois comme réactif et comme solvant réactionnel, en présence d'un catalyseur dont au moins l'un des éléments actifs est choisi parmi les métaux de transition, selon un mécanisme de déshydrogénocondensation (1ère phase),

et d'autre part, à mettre en oeuvre l'addition du polyorganosiloxane transformé par déshydrogénocondensation sur au moins un composé oléfinique dont dérive la fonctionnalité W du motif (**II**) selon un mécanisme d'hydrosilylation (2ème phase), en présence d'un catalyseur et de préférence à une température comprise entre 5 et 100 °C et plus préférentiellement encore entre 20 et 90 °C.

L'une des originalités de ce procédé réside dans l'utilisation de l'alcool correspondant au groupement Y, à la fois comme réactif et comme solvant réactionnel dans l'étape de déshydrogénocondensation. C'est là l'une des différences essentielles avec la méthode d'alcoolyse connue selon KOAMA et HUMEKI. Conformément à l'invention, il a pu être remarqué que quelle que soit la quantité d'alcool utilisée dans le procédé, il n'est pas possible de transformer toutes les fonctions SiW avec W = H du polyorganosiloxane de départ. Ainsi, après un certain taux de conversion limite, qui varie selon les conditions réactionnelles la stoechiométrie et la nature des réactifs, les SiH résiduels deviennent inactifs vis-à-vis de la déshydrogénocondensation. Par exemple, en présence d'éthanol, le taux de transformation des fonctions SiH initiales, plafonne à 66 %.

Cette déshydrogénocondensation originale conduit donc à un polyorganosiloxane comportant au moins une fonctionnalité rapportée et des fonctions SiH libres, et permettant d'accéder au polyorganosiloxane multifonctionnel, comme décrit dans ce qui suit.

Les alcools mis en oeuvre sont des alcanols linéaires ou ramifiés choisis parmi la liste suivante : méthanol, éthanol et/ou (iso)propanol, l'éthanol étant préféré.

Concernant le catalyseur, il est avantageusement choisi parmi ceux contenant au moins l'un des éléments suivants : Pt, Rh, Ru, Pd, Ni et leurs associations, ce catalyseur étant éventuellement couplé à un support inerte ou non.

Selon une disposition préférée de l'invention, le catalyseur est pris dans la famille des catalyseurs au platine utilisés traditionnellement pour réaliser des réactions d'hydrosilylation. Ces catalyseurs platiniques sont amplement décrits dans la littérature. On peut en particulier citer les complexes du platine et d'un produit organique décrits dans les brevets américains US-A-3 159 601, US-A-3 159 602, US-A-3 220 972 et les brevets européens EP-A-57 459 EP-188 978 et EP-A-190 530 ainsi que les complexes du platine et d'organopolysiloxane vinylé décrit dans les brevets américains US-A-3 419 593, US-A-3 715 334, US-A-3 377 432 et US-A-3 814 730. Le catalyseur de karstedt est un exemple de catalyseur platinique approprié pour le procédé selon l'invention. (Brevet US-A-3 775 452 Karstedt).

Les catalyseurs à base de nickel, comme par exemple le nickel de raney, constituent une alternative possible aux catalyseurs platiniques.

S'agissant des conditions réactionnelles, la désydrogénocondensation peut être réalisée dans une large gamme de température allant, par exemple, de 0 à 200 °C, mais il est clair que l'on préfère qu'elle s'effectue à une température comprise entre 20 et 80 °C de préférence entre 40 et 70°C.

La deuxième phase du procédé selon l'invention consiste en une réaction d'addition du polyorganosiloxane intermédiaire hydrogéné et produit par deshydrogénocondensation, sur au moins un composé oléfinique porteur d'au moins une liaison $\pi$.

Il s'agit d'un mécanisme d'hydrosilylation, en présence d'un catalyseur et, de préférence, à une température comprise entre 5 et 100 °C et plus préférentiellement encore entre 20 et 90 °C.

Selon une méthodologie préférée, on initie l'hydrosilylation en ajoutant le composé oléfinique dont dérive le radical W tel que défini ci-dessus, au polyorganosiloxane alcoxylé intermédiaire une fois que la déshydrogénocondensation est terminée. En pratique, cet ajout peut se faire lorsque le dégagement d'hydrogène a cessé.

L'alcène réactif peut être formé par un mélange de produits comportant une seule ou plusieurs espèces précurseurs de radicaux W, qui déterminent la multifonctionnalité du polyorganosiloxane final. Dans le cas où l'on prévoit plusieurs espèces W, on laisse, de préférence, d'abord réagir l'alcène correspondant à la seconde fonctionnalité, puis une fois que celui-ci a totalement réagi, on incorpore l'alcène correspondant à la troisième fonctionnalité et ainsi de suite.

Au lieu d'être incorporé au milieu réactionnel après la déshydrogénocondensation, le composé oléfinique précurseur de W peut être mis en oeuvre avant que ne débute cette première phase du procédé, ou bien encore pendant celle-ci.

Selon une caractéristique préférée de l'invention, on fait en sorte que l'hydrosilylation soit catalysée par au moins une partie du catalyseur de deshydrogénocondensation et, de préférence, exclusivement par ce catalyseur.

Il s'agit là de l'un des points particulièrement intéressants et inattendus du procédé de l'invention. En effet, il est tout à fait surprenant de constater que le catalyseur de déshydrogénocondensation, de préférence de nature platinique, est toujours actif pour cette deuxième phase d'hydrosilylation.

En effet, on sait parfaitement que le catalyseur subit un certain appauvrissement de ces performances lors de la déshydrocondensation. Mais ce qui est encore plus étonnant, c'est que le catalyseur est présent dans le milieu contenant les polyorganosiloxanes porteurs de SiH résiduels de post-déshydrocondensation. Or, en théorie et selon un préjugé largement répandu dans le domaine considéré, le catalyseur d'hydrosilylation, en particulier platinique, n'est actif que s'il est d'abord mis en présence du produit réactif comprenant au moins une liaison $\pi$. De sorte que l'on aurait du observer la formation d'un colloïde inactif dans le cas de l'invention. Mais il n'en n'est rien.

Au contraire, les SiH résiduels sont particulièrement réactifs vis-à-vis des composés oléfiniques rajoutés grâce à l'action du catalyseur d'hydrosilylation, qui est lui-aussi tout à fait efficace. Ce résultat permet d'obtenir, en une seule séquence et sans changer de réacteur, un polyorganosiloxane comportant plusieurs fonctionnalités différentes.

Les composés oléfiniques mis en oeuvre, peuvent être aisément déduits de la définition de W donnée ci-avant. Le choix quant à ce radical est déterminé par les applications visées (une ou plusieurs fonctionnalités différentes).

La phase d'hydrosilylation peut se dérouler, avantageusement, à température ambiante et en masse ou en solution, par exemple dans l'alcool qui a servi de solvant et de réactif à la réaction de déshydrogénocondensation.

En fin de réactions, les polyorganosiloxanes bruts qui sont obtenus peuvent être purifiés notamment par passage sur une colonne remplie d'une résine échangeuse d'ions et/ou par simple dévolatilisation des réactifs introduits en excès et éventuellement du solvant mis en oeuvre, par un chauffage opéré entre 100 et 180 °C sous pression réduite.

Les polyorganosiloxanes de départ servant, par exemple, à la préparation des produits fonctionnalisés linéaires sont ceux sélectionnés parmi ceux répondant à la formule suivante :

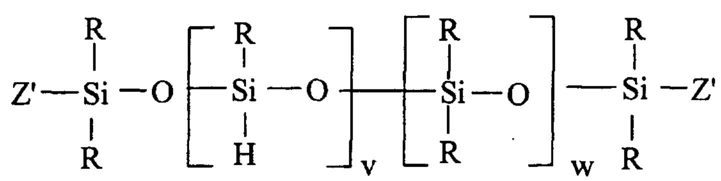

(VI)

dans laquelle :

- les symboles R sont identiques ou différents et sont tels que définis supra en légende à la formule des motifs (**I**) et (**II**),
- les symboles Z' sont identiques ou différents et correspondent à R ou à l'hydrogène,
- v est un entier ou un décimal $\geq 0$ définissable comme suit : $v = n + m + q$ ; n, m et q répondant aux définitions données supra en légende de la formule (**IV**),

  avec la condition selon laquelle si $v = 0$, alors $w \geq 1$ et les deux radicaux Z' correspondent à l'hydrogène,

- w répond à la même définition que celle de p donnée supra en légende de la formule (**IV**).

Les polyorganosiloxanes de départ servant, par exemple, à la préparation des produits fonctionnalisés cycliques sont ceux sélectionnés parmi ceux répondant à la formule moyenne suivante :

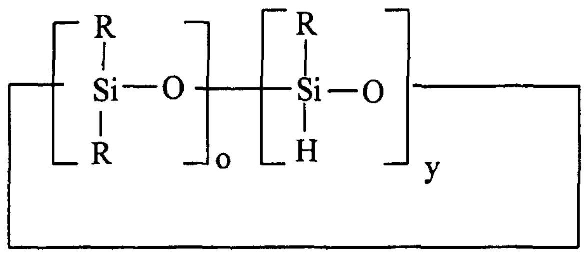

(VII)

dans laquelle :

- les symboles R sont identiques ou différents et sont tels que définis supra, en légende à la formule des motifs (**I**) et (**II**),
- o répond à la même définition que celle de u donnée supra, en légende de la formule (**V**),
- y est un entier ou un décimal ≥ 0, définissable comme suit : y = r + s + t et y + u ≥ 3. r, s, t et u répondant aux définitions données supra en légende de la formule (**V**).

Selon un autre de ces aspects, la présente invention concerne aussi un polyorganosiloxane fonctionnalisé consistant dans un copolymère linéaire, statistique, séquencé ou à bloc, comprenant dans la chaîne et/ou en bout de chaînes d'une part des fonctions alkoxyles Y reliées chacune au silicium par une liaison SiOC et d'autre part des fonctions W, de nature hydrocarbonée, reliées chacune au silicium par une liaison SiC, ledit polyorganosiloxane étant défini cette fois par le fait qu'il est susceptible d'être obtenu par le procédé consistant :

- d'une part à faire réagir un polyorganosiloxane de départ de formule :

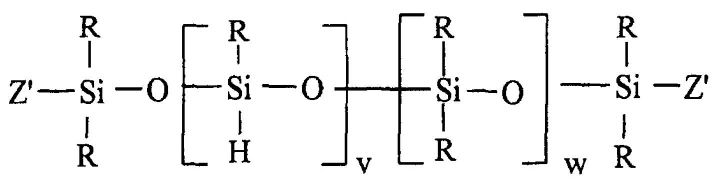

(VI)

dans laquelle :

- les symboles R sont identiques ou différents et sont choisis parmi les alkyles linéaires ou ramifiés ayant de 1 à 6 atomes de carbone et/ou parmi les aryles,
- les symboles Z' sont identiques ou différents et correspondent à R ou à H,
- v est un entier ou un décimal ≥ 0 avec les condition selon lesquelles : (1) v = n + m + q, n, m et q répondant aux définitions suivantes 0 ≤ n ≤ 100, 0 ≤ m ≤ 100 et 0 ≤ q ≤ 40 ; et (2) si v = 0, alors w ≥ 1 et les deux radicaux Z' correspondent à H,
- 0 ≤ w ≤ 20,

avec au moins un alcool de formule YH dont dérive la fonctionnalité Y qui est choisie parmi les radicaux méthoxyle, éthoxyle, propoxyle et/ou isopropoxyle, en opérant en présence d'un catalyseur dont au moins l'un des éléments actifs est choisi parmi les métaux de transition selon un mécanisme de déshydrogénocondensation, à une température comprise entre 0 et 200°C ; et

- d'autre part à mettre en oeuvre l'addition du polyorganosiloxane transformé par déshydrogénocondensation sur au moins un composé oléfinique dont dérive la fonctionalité W, W ayant la même définition que celle donnée supra, en opérant selon un mécanisme d'hydrosilylation en présence d'un catalyseur et à une température comprise entre 5 et 100°C.

Selon un autre de ses aspects, la présente invention concerne encore l'application des polyorganosiloxanes définis ci-dessus, ainsi que de ceux obtenus par le procédé également décrit ci-avant, à titre de modulateurs d'anti-adhérence et/ou d'agents réticulants dans des compositions silicones. Ces polyorganosiloxanes peuvent aussi être utilisés avantageusement, et il s'agit là d'un mode d'application préféré, comme agent de recouvrement de charge siliceuse en vue de favoriser la mise en oeuvre de la silice dans les compositions d'élastomères silicones et de permettre de renforcer les produits élastomères silicones obtenus à partir de ces compositions, comme par exemple les mastics d'étanchéité et de calfeutrement et les revêtements de protection utilisés dans l'industrie du bâtiment. Le brevet US n° 5 310 842 ou son correspondant EP-A-0 475 440 dont on a parlé au début du présent mémoire est muet à propos des applications visées ci-dessus.

La présente invention sera mieux comprise à la lumière des exemples qui suivent et qui décrivent les différents polyorganosiloxanes multifonctionnalisés ainsi que leur procédé de préparation. D'autres avantages et variantes de mises en oeuvre de l'invention ressortiront également de ces exemples.

**EXEMPLES :**

I - 1ERE PHASE DU PROCEDE SELON L'INVENTION

**Exemple 1 : Préparation d'un premier polyorganosiloxane (POS) à fonctionnalités Si-OEt et Si-H**

Dans un ballon tricot de 500 ml équipé d'une agitation mécanique, d'un thermomètre, et d'une ampoule de coulée, on charge sous atmosphère d'azote 300 ml d'éthanol préalablement séché sur tamis moléculaire 3 Angström, et 10 µl de catalyseur de KARSTEDT (10 % dans l'hexane). Le mélange est agité à 65°C et on commence à ajouter goutte à goutte le polyméthylhydrosiloxane (40 g, $dp_n$ = 50). On observe un dégagement d'hydrogène important. La vitesse de coulée du fluide Si-H est réglée pour contrôler le débit d'hydrogène et l'exothermie de la réaction. En fin de coulée, le mélange est laissé pendant une heure sous agitation. L'excès d'éthanol est éliminé à l'aide d'un évaporateur rotatif. On récupère une huile limpide et incolore, de viscosité 52 mPa.s, correspondant à la fomule moyenne suivante d'après une analyse RMN :

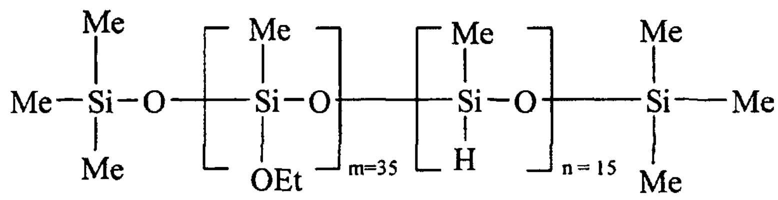

Cette huile présente une très bonne stabilité au stockage à l'abri de l'humidité.

**Exemple 2 : Préparation d'un deuxième POS précurseur à Si - OEt et Si - H**

Les réactifs et le protocole sont les mêmes qu'en exemple 1. Le produit obtenu répond à la même formule à la différence près que m = 32 et n = 18.

II - 1 ET 2EMES PHASES DU PROCEDE SELON L'INVENTION

**Exemple 3 : Préparation d'un POS à fonctionnalités Si-OEt et Si-Octyle**

On procède comme dans l'exemple 1 mais à la place d'évaporer l'excès d'alcool, on coule goutte à goutte 36 g d'octène-1. Après addition, on chauffe le mélange réactionnel à 60 °C jusqu'à ce que toutes les fonctions Si-H soient consommées. On évapore ensuite l'excès d'alcool et d'octène. On récupère 80 g d'huile limpide et légèrement colorée. L'analyse RMN révèle la structure suivante (RMN) :

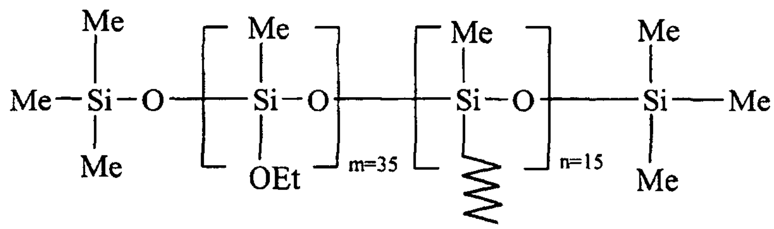

**Exemple 4 : Préparation d'un autre POS à fonctionnalités Si-OEt et Si-Octyle.**

Les réactifs et le protocole sont identiques à celui de l'exemple 3, mais au départ du POS précurseur à Si-OEt et Si-H de l'exemple 2. Le POS répond à la même formule à la différence près que m = 32 n = 18.

**Exemple 5 : Préparation d'un POS à fonctionnalités Si-OEt et Si-hexènyle.**

On procède comme dans l'exemple 3 en remplaçant l'octène par l'hexadiène-1,5.
Les quantités de POS SiOEt / SiH et d'hexadiène mises en oeuvre sont respectivement de 100 g et 122,81 g pour 14 mg de [Pt] initial.
La température du milieu réactionnel est maintenue à ≈ 30 °C.
On récupère en fin de manipulation une huile limpide et légèrement colorée.
Le RMN révèle la formule suivante :

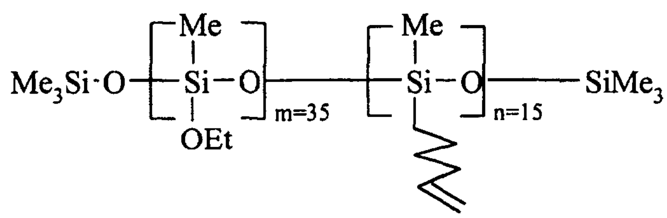

**Exemple 6 : Préparation d'un POS à fonctionnalités Si-OEt et Si-vinylcyclohexényle.**

6.1- Synthèse du POS

On procède comme à l'exemple 3, mais on remplace l'octène par du vinyl-4 cyclohexène-1 (VCH).
Les quantités de réactifs utilisés sont les suivantes :

- POS SiOEt/SiH = 100 g
- VCH = 39,16 g
- Pt Karstedt initial = 10 mg.

La température du milieu réactionnel est maintenue à ≈ 80 - 85 °C.
On récupère 130 g d'une huile limpide légèrement jaunie de formule :

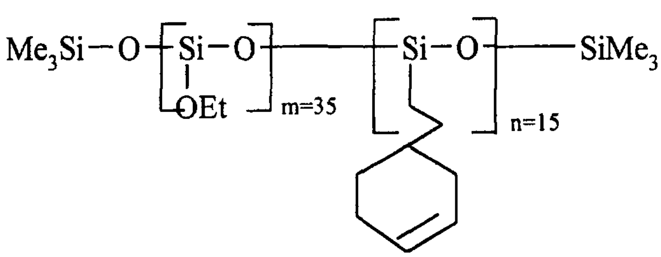

6.1- Utilisation du POS comme agent de recouvrement :

L'huile préparée dans l'exemple 6.1 est mise en oeuvre comme suivant dans une composition destinée à la préparation d'un élastomère silicone comportant une charge siliceuse :

Dans un réacteur de 3 litres, équipé d'une agitation centrale à trois pâles, on prépare environ 1 litre de chacune des deux compositions dont la constitution, exprimée en parties en poids, est indiquée dans le tableau suivant :

| Compositions | | Témoin | Exemple 6.2 |
|---|---|---|---|
| Huile 48 V 135.000 | (1) | 110 | 110 |
| Huile 47 V 1.000 | (2) | 20 | 20 |
| POS de l'exemple 6.1 | | 0 | 1 |
| VTMO | (3) | 5 | 5 |
| Accélérateur A | (4) | 0,64 | 0,64 |
| Aérosil 150 ® | (5) | 10 | 10 |
| Silane 1411 ® | (6) | 1,2 | 1,2 |
| Bréox B 225 ® | (7) | 0,75 | 0 |
| Catalyseur B | (8) | 0,1 | 0,1 |

(1) Huile α, ω-bis(hydroxy)polydiméthylsiloxane de viscosité égale à 135.000 mPa.s à 25°C.

(2) Huile α, ω-bis(triméthylsiloxy)polydiméthylsiloxane de viscosité égale à 1.000 mPa.s à 25°C.

(3) Réticulant vinyltriméthoxysilane.

(4) Solution à 4 % en poids de LiOH, $H_2O$ dans le méthanol.

(5) Silice de pyrogénation de 150 ± 30 $m^2/g$, commercialisée par DEGUSSA.

(6) Silane de formule : $(CH_3O)_2-\overset{\displaystyle CH_3}{\overset{|}{Si}}-(CH_2)_3NH(CH_2)_2NH_2$, commercialisé par HÛLS.

(7) Polypropylène-polyéthylène glycol à 1 % en poids de groupes OH, comercialisé par BP CHEMICAL.

(8) Mélange 50 / 50 en poids de dilaurate de dibutylétain et de chélate de diacétylacétonate de dibutylétain.

Chaque composition est préparée de la manière suivante :

| Opération | Agitation | Durée |
|---|---|---|
| 1. Chargement des huiles 48 V135.000 et 47 V 1000, du VTMO et du POS de l'exemple 6.1, puis | - | -- |
| 2. Mise sous agitation à 25°C, puis | 250 tours / min | 2 min |
| 3. Ajout de l'accélérateur A sous agitation réduite, puis | 100 tours / min | -- |
| 4. Mise sous agitation, puis | 350 tours / min | 4 min |
| 5. Ajout de la silice après avoir arrêté l'agitation, puis | -- | -- |
| 6. Mélange sous agitation, puis | 350 tours / min | 4 min |

(suite)

| Opération | Agitation | Durée |
|---|---|---|
| 7. Ajout des ingrédients silane 1411, Bréox et catalyseur B sous agitation réduite, puis | 100 tours / min | -- |
| 8. Mélange sous agitation, puis | 350 tours / min | 4 min |
| 9. Mise sous pression réduire de 46,6.$10^2$Pa | -- | 6 min |

Ensuite, après préparation, on étend à la racle chaque composition de façon à réaliser un film de 2 mm d'épaisseur qu'on laisse réticuler pendant 4 jours à 250°C.

Sur les films séchés on mesure les propriétés mécaniques suivantes :

- la dureté SHORE A (DSA) à 7 jours et à 14 jours selon la norme ISO 868,
- la résistance à la rupture (R/R) en MPa selon la norme AFNOR-T 46002,
- l'allongement à la rupture (A/R) en % selon la norme AFNOR-T 46002, et
- le module élastique (M100) à 100 % d'allongement selon la norme AFNOR-T 46002, en MPa.

Les propriétés mécaniques R/R, A/R et M 100 sont les propriétés initiales mesurées au bout de 4 jours.

Les résultats sont rassemblés dans le tableau suivant :

| Compositions | Témoin | Exemple 6.2 |
|---|---|---|
| DSA 7 jours | 17 | 20 |
| DSA 14 jours | 17 | 21 |
| R/R | 1,1 | 1,1 |
| A/R | 540 | 480 |
| M100 | 0,34 | 0,39 |

## Revendications

**1.** Polyorganosiloxane fonctionnalisé constitué, par molécule,

- α - d'une part, d'au moins un motif siloxyle fonctionnel de formule :

$$\text{(I)} \qquad (R)_a\ Y\ Si\ (O)_{\frac{3-a}{2}}$$

dans laquelle

* a = 0, 1 ou 2
* R est un radical hydrocarboné monovalent choisi parmi les alkyles linéaires ou ramifiés, ayant de 1 à 6 atomes et/ou parmi les aryles, les radicaux R étant identiques ou différents quand a = 2,
* Y est un radical alcoxyle linéaire ou ramifié choisi parmi les radicaux méthoxyle, éthoxyle et/ou (iso)propoxyle,

- β - et d'autre part, d'au moins un motif siloxyle fonctionnel de formule :

$$\text{(II)} \qquad (R)_b\ W\ Si(O)_{\frac{3-b}{2}}$$

dans laquelle

* b = 0, 1 ou 2,
* R répond à la même définition que celle donnée supra pour le substituant R du motif (I) et peut être identique ou différent de ce dernier,
* W est un radical hydrocarboné monovalent ayant de 2 à 30 atomes de carbone constituant un reste

fonctionnel, relié au silicium par une liaison Si-C,

ce reste étant choisi parmi les groupes suivants :

(i) un groupe alkyle, linéaire ou ramifié, comprenant au moins 7 atomes de carbone,
(2i) un groupe alkényle en $C_2$-$C_{20}$, linéaire ou ramifié, comportant une ou plusieurs doubles liaisons dans la (ou les) et/ou en extrémité(s) de chaîne(s), lesdites doubles liaisons étant éventuellement conjuguées,
(3i) un groupe mono ou bicyclique aliphatique insaturé comportant 5 à 20 atomes de carbone cycliques et une ou deux double(s) liaison(s) éthyléniques dans le cycle éventuellement substituée(s) par un ou deux groupe(s) alkyle(s) linéaire(s) ou ramifiée(s) en $C_1$-$C_3$, ledit groupe cyclique étant éventuellement relié au silicium par l'intermédiaire d'un radical alkylène linéaire ou ramifié en $C_2$-$C_{10}$,

- $\gamma$ - et éventuellement d'au moins un motif siloxyle (III) de formule suivante :

$$(R)_c(H)_dSi(O)_{\frac{4-(c+d)}{2}} \qquad \text{(III)}$$

dans laquelle
* c = 0, 1, 2 ou 3, d = 0 ou 1 et $c + d \leq 3$
* les substituants R étant tels que définis ci-dessus dans les motifs (**I**) et (**II**).

**2.** Polyorganosiloxane selon la revendication 1, **caractérisé en ce que** le substituant W du motif (**II**) est choisi parmi les radicaux suivants :

- un radical alkyle (i) choisi parmi les radicaux alkyles suivants : octyle, dodécyle, undécyle, tridécyle ;
- un radical (2i) consistant dans l'hexènyle ou le dodécènyle ;
- un radical (3i) consistant dans le cyclohexènyle ou le méthyl-1 cyclohexène-1 yle, éventuellement relié au silicium par l'intermédiaire d'un radical alkylène linéaire ou ramifié en $C_2$-$C_6$.

**3.** Polyorganosiloxane selon la revendication 1 ou 2 **caractérisé en ce qu'**il est formé par un copolymère linéaire, statistique, séquencé ou à blocs, de formule moyenne suivante :

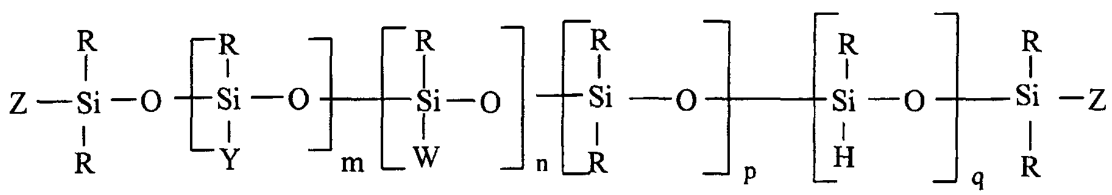

(IV)

dans laquelle :

- les symboles Y, W et R sont tels que définis dans les revendications 1 et 2,
- le symbole Z est un radical monovalent choisi parmi les radicaux formés par l'hydrogène et parmi ceux répondant aux définitions de R, Y et W,
- la somme $m + n + p + q \geq 3$,
- $0 \leq m \leq 100$,
- $0 \leq n \leq 100$,
- $0 \leq p \leq 20$,
- $0 \leq q \leq 40$,
- avec les conditions selon lesquelles :

  . si m = 0, au moins l'un des substituants Z correspond à un radical répondant à la définition caractérisant Y,

- si n = 0, au moins l'un des substituants Z correspond à un radical répondant à la définition caractérisant W,
- et si m = n = 0 et p + q ≥ 1, alors l'un des substituants Z correspond à un radical répondant à la définition caractérisant Y et l'autre des substituants Z correspondant à la définition caractérisant W.

**4.** Polyorganosiloxane selon la revendication 3, **caractérisé en ce que** p = q = o et 0,1 ≤ m/n ≤ 5 dans la formule (**IV**).

**5.** Polyorganosiloxane selon la revendication 1 ou 2 **caractérisé en ce qu'**il est constitué par un copolymère cyclique de formule moyenne suivante :

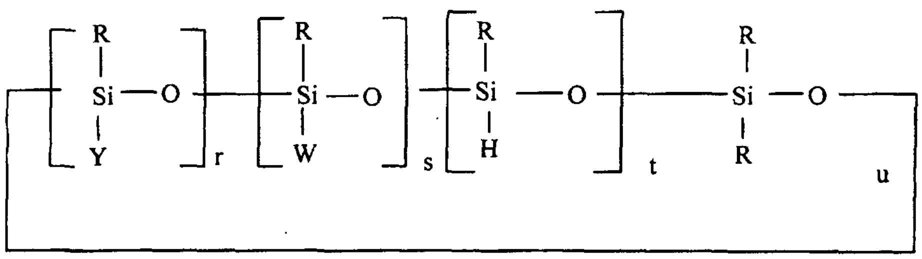

(V)

dans laquelle Y, W et R sont tels que définis dans les revendications 1 et 2, et avec r, s, t et u représentant des nombres entiers ou décimaux positifs :

+ la somme r + s + t + u ≥ 3
+ 1 ≤ r ≤ 8,
+ 1 ≤ s ≤ 8,
+ 0 ≤ t ≤ 8,
+ 0 ≤ u ≤ 8.

**6.** Polyorganosiloxane selon la revendication 3, 4 ou 5 **caractérisé en ce qu'**il comprend des produits correspondants à ceux pour lesquels R = $CH_3$ et p = u = 0 dans les formules (**IV**) et (**V**).

**7.** Polyorganosiloxane formé par un mélange de polyorganosiloxanes selon l'une quelconque des revendications 1 à 6.

**8.** Procédé de préparation de polyorganosiloxane selon l'une quelconque des revendications 1 à 7 **caractérisé en ce qu'**il consiste, d'une part, à faire réagir un polyorganosiloxane de départ comprenant des motifs de formule (**II**) tels que définis dans la revendication 1 et dans lesquels W représente l'hydrogène,

avec au moins un alcool de formule YH dont dérive la fonctionnalité Y du motif (**I**) utile comme réactif et comme solvant réactionnel, en présence d'un catalyseur dont au moins l'un des éléments actifs est choisi parmi les métaux de transition, selon un mécanisme de déshydrogénocondensation (1ère phase), à une température comprise entre 0 et 200°C,

et d'autre part, à mettre en oeuvre l'addition du polyorganosiloxane transformé par déshydrogénocondensation sur au moins un composé oléfinique dont dérive la fonctionnalité W du motif (**II**) selon un mécanisme d'hydrosilylation (2ème phase), en présence d'un catalyseur et de préférence à une température comprise entre 5 et 100°C.

**9.** Procédé selon la revendication 8, **caractérisé en ce que** l'on ajoute le composé oléfinique au milieu réactionnel avant, pendant ou après la déshydrogénocondensation.

**10.** Procédé selon la revendication 8 ou 9 **caractérisé en ce que** le polyorganosiloxane de départ est sélectionné parmi ceux répondant à la formule moyenne suivante :

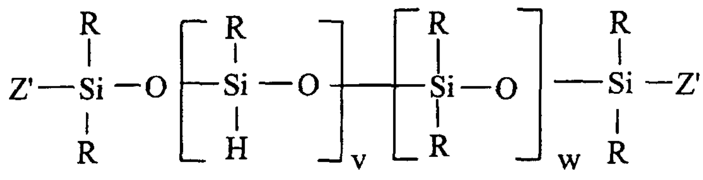

(VI)

dans laquelle :

- les symboles R sont identiques ou différents et sont tels que définis en légende à la formule des motifs (**I**) et (**II**) selon la revendication 1,
- les symboles Z' sont identiques ou différents et correspondent à R ou à l'hydrogène,
- v est un entier ou un décimal ≥ 0 définissable comme suit : v = n + m + q ; n, m et q répondant aux définitions données supra en légende de la formule (**IV**),
  avec la condition selon laquelle si v = 0, alors w ≥ 1 et les deux radicaux Z' correspondent à l'hydrogène,
- w répond à la même définition que celle de p donnée supra en légende de la formule (**IV**) selon la revendication 3.

**11.** Procédé selon la revendication 8 ou 9 **caractérisé en ce que** le polyorganosiloxane de départ est sélectionné parmi ceux répondant à la formule moyenne suivante :

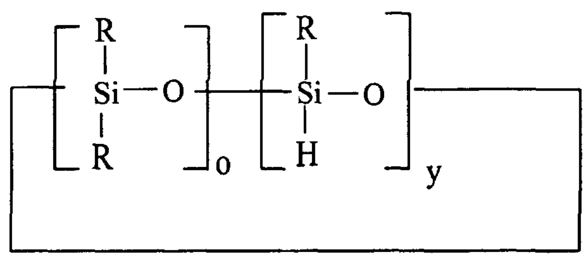

(VII)

dans laquelle :

- les symboles R sont identiques ou différents et sont tels que définis, en légende à la formule des motifs (**I**) et (**II**) selon la revendication 1,
- o répond à la même définition que celle de u donnée supra, en légende de la formule (**V**) selon la revendication 5,
- y est un entier ou un décimal ≥ 0, définissable comme suit y = r + s + t et y + u ≥ 3, r, s, t et u répondant aux définitions données supra en légende de la formule (**V**).

**12.** Procédé selon l'une quelconque des revendications 8 à 11, **caractérisé en ce que** le catalyseur est choisi parmi ceux contenant au moins l'un des éléments suivants : Pt, Rh; Ru, Pd, Ni et leurs associations, ce catalyseur étant éventuellement couplé à un support inerte ou non.

**13.** Procédé selon l'une quelconque des revendications 8 à 12 **caractérisé en ce que** la déshydrogénocondensation est effectuée à une température comprise entre 20 et 80°C.

**14.** Procédé selon l'une quelconque des revendications 8 à 13 caractérisé en ce l'hydrosilylation est effectuée à une

température comprise entre 20 et 90°C.

**15.** Procédé selon l'une quelconque des revendications 8 à 14 **caractérisé en ce que** l'on fait en sorte que l'hydrosilylation soit catalysée par au moins une partie du catalyseur de déshydrogénocondensation.

**16.** Polyorganosiloxanes fonctionnalisé consistant dans un copolymère linéaire, statistique, séquencé ou à bloc, comprenant dans la chaîne et/ou en bout de chaines d'une part des fonctions alkoxyles Y reliées chacune au silicium par une liaison SiOC et d'autre part des fonctions W, de nature hydrocarbonée, reliées chacune au silicium par une liaison SiC, ledit polyorganosiloxane étant **caractérisé en ce qu'**il est susceptible d'être obtenu par le procédé consistant :

- d'une part à faire réagir un polyorganosiloxane de départ de formule :

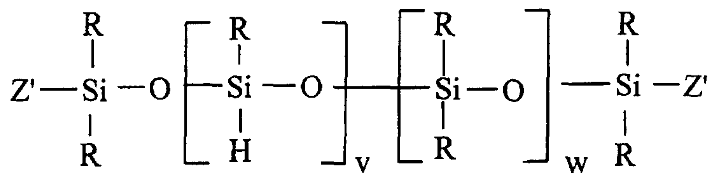

(VI)

dans laquelle :

- les symboles R sont identiques ou différents et sont choisis parmi les alkyles linéaires ou ramifiés ayant de 1 à 6 atomes de carbone et/ou parmi les aryles,
- les symboles Z' sont identiques ou différents et correspondent à R ou à H,
- v est un entier ou un décimal $\geq 0$ avec les condition selon lesquelles : (1) $v = n + m + q$, n, m et q répondant aux définitions suivantes $0 \leq n \leq 100$, $0 \leq m \leq 100$ et $0 \leq q \leq 40$ ; et (2) si $v = 0$, alors $w \geq 1$ et les deux radicaux Z' correspondent à H,
- $0 \leq w \leq 20$,

avec au moins un alcool de formule YH dont dérive la fonctionnalité Y qui est choisie parmi les radicaux méthoxyle, éthoxyle, propoxyle et/ou isopropoxyle, en opérant en présence d'un catalyseur dont au moins l'un des éléments actifs est choisi parmi les métaux de transition selon un mécanisme de déshydrogénocondensation, à une température comprise entre 0 et 200°C ; et

- d'autre part à mettre en oeuvre l'addition du polyorganosiloxane transformé par déshydrogénocondensation sur au moins un composé oléfinique dont dérive la fonctionalité W, W ayant la même définition que celle donnée supra dans la revendication 1 ou 2, en opérant selon un mécanisme d'hydrosilylation en présence d'un catalyseur et à une température comprise entre 5 et 100°C.

**17.** Polyorganosiloxane selon la revendication 16, **caractérisé en ce que** le catalyseur de déshydrogénocondensation est choisi parmi ceux contenant au moins l'un des éléments suivants : Pt, Rh, Ru, Pd, Ni et leurs associations, ce catalyseur étant éventuellement couplé à un support inerte ou non.

**18.** Polyorganosiloxane selon la revendications 16 ou 17, **caractérisé en ce que** la déshydrogénocondensation est effectuée à une température comprise entre 20 et 80°C.

**19.** Polyorganosiloxane selon l'une quelconque des revendications 16 à 18, **caractérisé en ce que** l'hydrosilylation est effectuée à une température comprise entre 20 et 90°C.

**20.** Polyorganosiloxane selon l'une quelconque des revendications 16 à 19, **caractérisé en ce que** l'on fait en sorte que l'hydrosilylation soit catalysée par au moins une partie du catalyseur de déshydrogénocondensation.

**21.** Application des polyorganosiloxanes selon l'une quelconque des revendications 1 à 7 et/ou des polyorganosiloxanes obtenus par le procédé selon l'une quelconque des revendications 8 à 15 et/ou des polyorganosiloxanes selon l'une quelconque des revendications 16 à 20 à titre de modulateurs d'antiadhérence dans des compositions silicones.

**22.** Application des polyorganosiloxanes selon l'une quelconque des revendications 1 à 7 et/ou des polyorganosiloxanes obtenus par le procédé selon l'une quelconque des revendications 8 à 15 et/ou des polyorganosiloxanes selon l'une quelconque des revendications 16 à 20 à titre d'agents de recouvrement de charge siliceuse en vue de favoriser la mise en oeuvre de la silice dans les compositions d'élastomères silicones et de permettre de renforcer les produits élastomères silicones obtenus à partir de ces compositions.

**Patentansprüche**

**1.** Funktionalisiertes Polyorganosiloxan, bestehend pro Molekül aus

- $\alpha$ - einerseits mindestens einer funktionellen Struktureinheit Siloxyl der Formel

$$(I) \qquad (R)_a\ Y\ Si(O)_{\frac{3-a}{2}}$$

in der

* a = 0, 1 oder 2 ist,
* R einen monovalenten Kohlenwasserstoffrest darstellt, ausgewählt unter den linearen oder verzweigten Alkylen mit 1 bis 6 Kohlenstoffatomen und/oder den Arylen, wobei die Reste R gleich oder verschieden sind, wenn a = 2 ist,
* Y einen linearen oder verzweigten Rest Alkoxyl bedeutet, ausgewählt unter den Resten Methoxyl, Ethoxyl und/oder (Iso)propoxyl,

- $\beta$ - andererseits mindestens einer funktionellen Struktureinheit Siloxyl der Formel

$$(II) \qquad (R)_b\ W\ Si(O)_{\frac{3-b}{2}}$$

in der

* b = 0, 1 oder 2 ist,
* R die gleiche Definition wie oben beim Substituenten R der Struktureinheit (I) angegeben besitzt und zu diesem letzteren gleich oder verschieden sein kann,
* W einen monovalenten Kohlenwasserstoffrest mit 2 bis 30 Kohlenstoffatomen darstellt, der einen funktionellen Rest bildet und mit dem Silicium durch eine Bindung Si-C verbunden ist,

wobei dieser Rest unter den folgenden Gruppen ausgewählt wird:

(i) einer linearen oder verzweigten Gruppe Alkyl mit mindestens 7 Kohlenstoffatomen,
(2i) einer linearen oder verzweigten Gruppe Alkenyl mit 2 bis 20 Kohlenstoffatomen, umfassend eine oder mehrere Doppelbindungen an dem und/oder den Ende(n) der Kette(n), wobei die genannten Doppelbindungen gegebenenfalls konjugiert sind,
(3i) einer ungesättigten aliphatischen mono- oder bicyclischen Gruppe mit 5 bis 20 cyclischen Kohlenstoffatomen und einer oder zwei ethylenischen Doppelbindung(en) im Ring, gegebenenfalls substituiert durch eine oder zwei gerade oder verzweigte Gruppe(n) Alkyl mit 1 bis 3 Kohlenstoffatomen, wobei die cyclische Gruppe gegebenenfalls mit dem Silicium durch das Zwischenglied eines linearen oder verzweigten Restes Alkylen mit 2 bis 10 Kohlenstoffatomen verbunden ist, und
- $\gamma$ - gegebenenfalls mindestens einer Struktureinheit Siloxyl (III) der folgenden Formel

$$(R)_c\,(H)_d\,Si(O)_{\frac{4-(c+d)}{2}} \qquad (III)$$

in der

* $c = 0, 1, 2$ oder 3, $d = 0$ oder 1 und $c + d \leq 3$ sind,
* die Substituenten R wie oben bei den Struktureinheiten (I) und (II) definiert sind.

**2.** Polyorganosiloxan nach Anspruch 1, **dadurch gekennzeichnet, daß** der Substituent W der Struktureinheit (II) ausgewählt wird unter den folgenden Resten:

- einem Rest (i) Alkyl, ausgewählt unter den folgenden Resten Alkyl: Octyl, Dodecyl, Undecyl, Tridecyl;
- einem Rest (2i), bestehend aus Hexenyl oder Dodecenyl;
- - einem Rest (3i), bestehend aus Cyclohexenyl oder 1-Methyl-1-cyclohexenyl, gegebenenfalls verbunden mit dem Siliciumatom durch das Zwischenglied eines linearen oder verzweigten Restes Alkylen mit 2 bis 6 Kohlenstoffatomen.

**3.** Polyorganosiloxan nach Anspruch 1 oder 2, **dadurch gekennzeichnet, daß** es aus einem linearen, statistisch in Sequenzen oder Blöcken, Copolymer der folgenden mittleren Formel (IV)

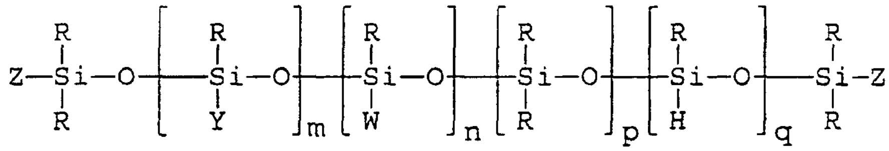

(IV)

gebildet wird,
in der

- die Symbole Y, W und R wie in den Ansprüchen 1 und 2 definiert sind,
- das Symbol Z ein monovalenter Rest ist, ausgewählt unter den Resten, die durch Wasserstoff und die Reste gebildet werden, die den Definitionen von R, Y und W entsprechen,
- die Summe $m + n + p + q \geq 3$ ist,
- $0 \leq m \leq 100$ ist,
- $0 \leq n \leq 100$ ist,
- $0 \leq p \leq 20$ ist,
- $0 < q \leq 40$ ist,
- mit den Bedingungen, nach denen:

  . wenn $m = 0$ ist, mindestens einer der Substituenten Z einem Rest mit der Definition von Y entspricht,
  . wenn $n = 0$ ist, mindestens einer der Substituenten Z einem Rest mit der Definition von W entspricht, und
  . wenn $m = n = 0$ und $p + q \geq 1$ sind, dann einer der Substituenten Z einem Rest mit der Definition von Y entspricht und der andere der Substituenten Z einem Rest mit der Definition von W entspricht.

**4.** Polyorganosiloxan nach Anspruch 3, **dadurch gekennzeichnet, daß** in der Formel (IV) $p = q = 0$ und $0{,}1 \leq m/n \leq 5$ sind.

**5.** Polyorganosiloxan nach Anspruch 1 oder 2, **dadurch gekennzeichnet, daß** es aus einem cyclischen Copolymer der folgenden mittleren Formel (V)

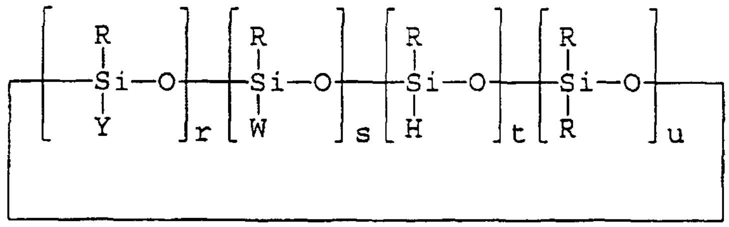

(V)

besteht, in der

Y, W und R wie in den Ansprüchen 1 und 2 definiert sind, und r, s, t und u ganze Zahlen oder positive Dezimalzahlen darstellen,

+ die Summe $r + s + t + u \geq 3$ ist,
+ $1 \leq r < 8$ ist,
+ $1 \leq s < 8$ ist,
+ $0 \leq t \leq 8$ ist,
+ $0 \leq u < 8$ ist.

**6.** Polyorganosiloxan nach Anspruch 3, 4 oder 5, **dadurch gekennzeichnet, daß** es Produkte umfaßt, die denen entsprechen, worin in den Formeln (IV) und (V) $R = CH_3$ und $p = u = 0$ sind.

**7.** Polyorganosiloxan, gebildet aus einer Mischung von Polyorganosiloxanen nach irgendeinem der Ansprüche 1 bis 6.

**8.** Verfahren zur Herstellung von Polyorganosiloxan nach irgendeinem der Ansprüche 1 bis 7, **dadurch gekennzeichnet, daß** es einerseits darin besteht, ein Polyorganosiloxan als Ausgangsstoff, das Struktureinheiten der Formel (II) wie in Anspruch 1 definiert umfaßt und worin W Wasserstoff darstellt,

mit mindestens einem Alkohol der Formel YH, von dem sich die Funktionalität Y der Struktureinheit (I) ableitet, verwendet als Reaktand und als Lösungsmittel der Reaktion, in Anwesenheit eines Katalysators, bei dem mindestens eines der aktiven Elemente unter den Übergangsmetallen ausgewählt wird, gemäß einem Mechanismus der Dehydrokondensation (1. Phase) bei einer Temperatur zwischen 0 °C und 200 °C zur Reaktion zu bringen, und andererseits die Addition des durch die Dehydrokondensation umgewandelten Polyorganosiloxans mit mindestens einer olefinischen Verbindung, von der sich die Funktionalität W der Struktureinheit (II) ableitet, gemäß einem Mechanismus der Hydrosilylierung (2. Phase) in Anwesenheit eines Katalysators und bei einer Temperatur zwischen 5 °C und 100 °C durchzuführen.

**9.** Verfahren nach Anspruch 8, **dadurch gekennzeichnet, daß** man die olefinische Verbindung vor, während oder nach der Dehydrokondensation zu dem Reaktionsmedium gibt.

**10.** Verfahren nach Anspruch 8 oder 9, **dadurch gekennzeichnet, daß** das Polyorganosiloxan als Ausgangsstoff unter denjenigen ausgewählt wird, die der folgenden mittleren Formel (VI)

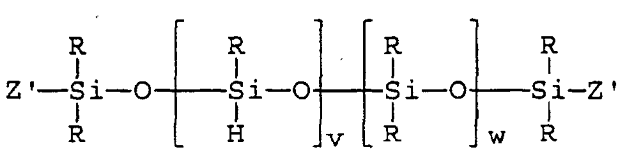

(VI)

entsprechen, in der

- die Symbole R gleich oder verschieden und so wie in der Formel der Struktureinheiten (I) und (II) gemäß Anspruch 1 definiert sind,
- die Symbole Z' gleich oder verschieden sind und R oder Wasserstoff entsprechen,
- v eine ganze Zahl oder eine Dezimalzahl $\geq 0$ ist, wie folgt zu definieren: $v = n + m + q$, wobei n, m und q den oben bei der Formel (IV) angegebenen Definitionen entsprechen, mit der Bedingung, wonach in dem Fall, wo

v = 0 ist, dann w ≥ 1 ist und die zwei Reste Z' Wasserstoff entsprechen,

- w der gleichen Definition entspricht wie oben bei p in der Erläuterung der Formel (IV) gemäß Anspruch 3 angegeben.

**11.** Verfahren nach Anspruch 8 oder 9, **dadurch gekennzeichnet, daß** das Polyorganosiloxan als Ausgangsstoff unter denjenigen ausgewählt wird, die der folgenden mittleren Formel (VII)

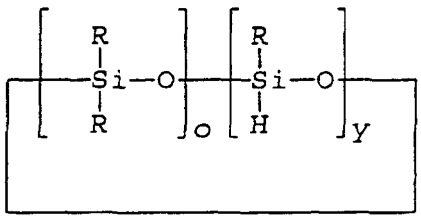

(VII

entsprechen, in der

- die Symbole R gleich oder verschieden und so wie in der Formel der Struktureinheiten (I) und (II) gemäß Anspruch 1 definiert sind,
- o der gleichen Definition wie oben bei u angegeben entspricht, bei der Erläuterung der Formel (V) in Anspruch 5,
- y eine ganze Zahl oder eine Dezimalzahl ≥ 0 ist, wie folgt zu definieren: $y = r + s + t$ und $y + u \geq 3$, wobei r, s, t und u den oben bei der Formel (V) angegebenen Definitionen entsprechen.

**12.** Verfahren nach irgendeinem der Ansprüche 8 bis 11, **dadurch gekennzeichnet, daß** der Katalysator unter denen ausgewählt wird, die mindestens eines der folgenden Elemente umfassen: Pt, Rh; Ru, Pd, Ni und ihre Assoziationen, wobei dieser Katalysator gegebenenfalls mit einem inerten oder nicht inerten Träger gekoppelt ist.

**13.** Verfahren nach irgendeinem der Ansprüche 8 bis 12, **dadurch gekennzeichnet, daß** die Dehydrokondensation bei einer Temperatur zwischen 20 °C und 80 °C durchgeführt wird.

**14.** Verfahren nach irgendeinem der Ansprüche 8 bis 13, **dadurch gekennzeichnet, daß** die Hydrosilylierung bei einer Temperatur zwischen 20 °C und 90 °C durchgeführt wird.

**15.** Verfahren nach irgendeinem der Ansprüche 8 bis 14, **dadurch gekennzeichnet, daß** man es so einrichtet, daß die Hydrosilylierung durch mindestens einen Teil des Katalysators der Dehydrokondensation katalysiert wird.

**16.** Funktionalisiertes Polyorganosiloxan, bestehend aus einem linearen, statistisch in Sequenzen oder Blöcken, Copolymer, das in seiner Kette und/oder am Ende der Ketten einerseits Funktionen Alkoxyl Y, jeweils verbunden mit dem Silicium durch eine Bindung SiOC, und andererseits Funktionen W mit kohlenwasserstoffartiger Beschaffenheit umfaßt, jeweils verbunden mit dem Silicium durch eine Bindung SiC, wobei das genannte Polyorganosiloxan **dadurch gekennzeichnet ist, daß** es fähig ist, durch das Verfahren erhalten zu werden, das besteht in:

- einerseits der Reaktion eines Polyorganosiloxans als Ausgangsstoff der Formel (VI)

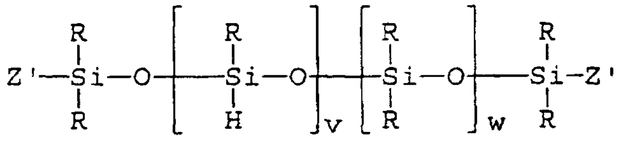

(VI)

in der

· die Symbole R gleich oder verschieden sind und unter den linearen oder verzweigten Alkylen mit 1 bis 6

Kohlenstoffatomen und/oder unter den Arylen ausgewählt werden,

- die Symbole Z' gleich oder verschieden sind und R oder Wasserstoff entsprechen,
- v eine ganze Zahl oder eine Dezimalzahl $\geq 0$ ist, mit Bedingungen nach denen:

  (1) $v = n + m + q$ ist, wobei n, m und q den folgenden Definitionen entsprechen: $0 \leq n \leq 100$, $0 \leq m \leq 100$ und $0 \leq q \leq 40$; und
  (2) wenn $v = 0$ ist, dann $w \geq 1$ ist und die zwei Reste Z' Wasserstoff entsprechen,

- $0 \leq w \leq 20$ ist,

mit mindestens einem Alkohol der Formel YH, von dem sich die Funktionalität Y ableitet, die ausgewählt wird unter den Resten Methoxyl, Ethoxyl, Propoxyl und/oder Isopropoxyl, indem man in Anwesenheit eines Katalysators, bei dem mindestens eines der aktiven Elemente unter den Übergangsmetallen ausgewählt wird, gemäß einem Mechanismus der Dehydrokondensation bei einer Temperatur zwischen 0 °C und 200 °C arbeitet; und

- andererseits der Durchführung der Addition des durch die Dehydrokondensation umgewandelten Polyorganosiloxans mit mindestens einer olefinischen Verbindung, von der sich die Funktionalität W ableitet, wobei W die gleiche Bedeutung besitzt wie oben in den Ansprüchen 1 und 2 angegeben, gemäß einem Mechanismus der Hydrosilylierung in Anwesenheit eines Katalysators und bei einer Temperatur zwischen 5 °C und 100 °C.

**17.** Polyorganosiloxan nach Anspruch 16, **dadurch gekennzeichnet, daß** der Katalysator der Dehydrokondensation unter denjenigen ausgewählt wird, die mindestens eines der folgenden Elemente umfassen; Pt, Rh, Ru, Pd, Ni und ihre Assoziationen, wobei dieser Katalysator gegebenenfalls mit einem inerten oder nicht inerten Träger gekoppelt ist.

**18.** Polyorganosiloxan nach Anspruch 16 oder 17, **dadurch gekennzeichnet, daß** die Dehydrokondensation bei einer Temperatur zwischen 20 °C und 80 °C durchgeführt wird.

**19.** Polyorganosiloxan nach irgendeinem der Ansprüche 16 bis 18, **dadurch gekennzeichnet, daß** die Hydrosilylierung bei einer Temperatur zwischen 20 °C und 90 °C durchgeführt wird.

**20.** Polyorganosiloxan nach irgendeinem der Ansprüche 16 bis 19, **dadurch gekennzeichnet, daß** man es so einrichtet, daß die Hydrosilylierung durch mindestens einen Teil des Katalysators der Dehydrokondensation katalysiert wird.

**21.** Verwendung der Polyorganosiloxane nach irgendeinem der Ansprüche 1 bis 7 und/oder der Polyorganosiloxane, erhalten durch das Verfahren nach irgendeinem der Ansprüche 8 bis 15 und/oder der Polyorganosiloxane nach irgendeinem der Ansprüche 16 bis 20 als Antihaftmodulatoren in Silicon-Zusammensetzungen.

**22.** Verwendung der Polyorganosiloxane nach irgendeinem der Ansprüche 1 bis 7 und/oder der Polyorganosiloxane, erhalten durch das Verfahren nach irgendeinem der Ansprüche 8 bis 15 und/oder der Polyorganosiloxane nach irgendeinem der Ansprüche 16 bis 20 als Überzug für silikathaltige Füllstoffe im Hinblick auf die Begünstigung des Einsatzes von Kieselerde in Zusammensetzungen von Siliconelastomeren und die Möglichkeit zur Verstärkung der ausgehend von diesen Zusammensetzungen erhaltenen Siliconelastomer-Produkte.

## Claims

**1.** Functionalized polyorganosiloxane composed, per molecule,

- $\alpha$ - on the one hand, of at least one functional siloxy unit of formula:

$$\text{(I)} \qquad (R)_a\, Y\, SI(O)_{\frac{3-a}{2}}$$

in which

* a = 0, 1 or 2

* R is a monovalent hydrocarbon radical chosen from linear or branched alkyls having from 1 to 6 atoms and/or from aryls, the R radicals being identical or different when a = 2,
* Y is a linear or branched alkoxy radical chosen from methoxy, ethoxy and/or (iso)propoxy radicals,

- β - and, on the other hand, of at least one functional siloxy unit of formula:

$$\text{(II)} \qquad (R)_b\, W\, Si(O)_{\frac{3-b}{2}}$$

in which

* b = 0, 1 or 2,
* R corresponds to the same definition as that given above for the R substituent of the unit (I) and can be identical to or different from the latter,
* W is a monovalent hydrocarbon radical having from 2 to 30 carbon atoms constituting a functional residue, connected to the silicon via an Si-C bond,

this residue being chosen from the following groups:

(i) a linear or branched alkyl group comprising at least 7 carbon atoms,
(2i) a linear or branched $C_2$-$C_{20}$ alkenyl group comprising one or more double bonds in the chain(s) and/or at the chain end(s), the said double bonds optionally being conjugated,
(3i) an unsaturated mono- or bicyclic aliphatic group comprising 5 to 20 cyclic carbon atoms and one or two ethylenic double bond(s) in the ring, the ethylenic double bond(s) optionally being substituted by one or two linear or branched $C_1$-$C_3$ alkyl group(s) and the said cyclic group optionally being connected to the silicon via a linear or branched $C_2$-$C_{10}$ alkylene radical,

- γ - and, optionally, of at least one siloxy unit (III) of following formula:

$$(R)_c(H)_dSi(O)_{\frac{4-(c+d)}{2}} \qquad \text{(III)}$$

in which

* c = 0, 1, 2 or 3, d = 0 or 1 and c + d ≤ 3,
* the R substituents being as defined above in the units (I) and (II).

**2.** Polyorganosiloxane according to claim 1, **characterized in that** the W substituent of the unit (II) is chosen from the following radicals:

- an alkyl radical (i) chosen from the following alkyl radicals: octyl, dodecyl, undecyl or tridecyl;
- a radical (2i) consisting of hexenyl or dodecenyl;
- a radical (3i) consisting of cyclohexenyl or 1-methylcyclohex-1-enyl, optionally connected to the silicon via a linear or branched $C_2$-$C_6$ alkylene radical.

**3.** Polyorganosiloxane according to claim 1 or 2, **characterized in that** it is formed by a random, sequenced or block linear copolymer with the following average formula:

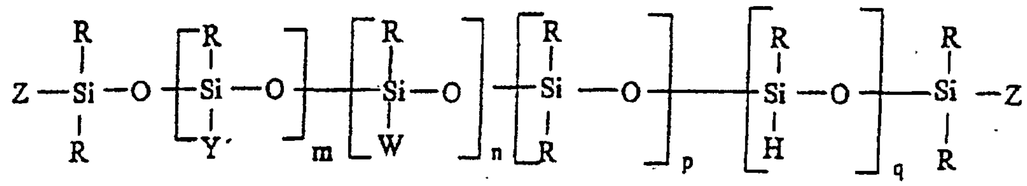

(IV)

in which:

- the symbols Y, W and R are as defined in claims 1 and 2,
- the symbol Z is a monovalent radical chosen from the radicals formed by hydrogen and from those corresponding to the definitions of R, Y and W,
- the sum $m + n + p + q \geq 3$,
- $0 \leq m \leq 100$,
- $0 \leq n \leq 100$,
- $0 \leq p \leq 20$,
- $0 \leq q \leq 40$,
- with the conditions according to which:

  - if m = 0, at least one of the Z substituents corresponds to a radical corresponding to the definition characterizing Y,
  - if n = 0, at least one of the Z substituents corresponds to a radical corresponding to the definition characterizing W,
  - and if m = n = 0 and $p + q \geq 1$, then one of the Z substituents corresponds to a radical corresponding to the definition characterizing Y and the other of the Z substituents corresponds to the definition characterizing W.

**4.** Polyorganosiloxane according to claim 3, **characterized in that** p = q = 0 and $0.1 \leq m/n \leq 5$ in the formula (IV).

**5.** Polyorganosiloxane according to claim 1 or 2, **characterized in that** it consists of a cyclic copolymer of following average formula:

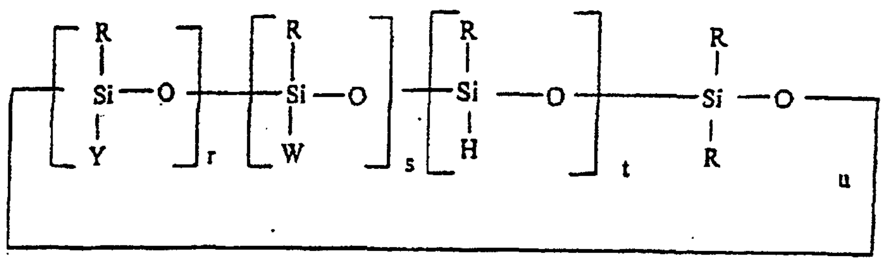

(V)

in which Y, W and R are as defined in claims 1 and 2, and with r, s, t and u representing positive whole or decimal numbers:

+ the sum $r + s + t + u \geq 3$,
+ $1 \leq r \leq 8$,
+ $1 \leq s \leq 8$,
+ $0 \leq t \leq 8$,

+ $0 \leq u \leq 8$.

**6.** Polyorganosiloxane according to claim 3, 4 or 5, **characterized in that** it comprises products corresponding to those in which R = $CH_3$ and p = u = 0 in the formulae (IV) and (V).

**7.** Polyorganosiloxane formed by a mixture of polyorganosiloxanes according to any one of claims 1 to 6.

**8.** Process for the preparation of polyorganosiloxane according to any one of claims 1 to 7, **characterized in that** it consists, first, in reacting a starting polyorganosiloxane comprising units of formula (II) as defined in claim 1 and in which W represents hydrogen,

with at least one alcohol of formula YH from which the functionality Y of the unit (I) derives which is useful as reactant and as reaction solvent, in the presence of a catalyst, at least one of the active elements of which is chosen from the transition metals, according to a dehydrogenation/condensation mechanism (1st stage), at a temperature of between 0 and 200°C,

and, secondly, in carrying out the addition of the polyorganosiloxane converted by dehydrogenation/condensation to at least one olefinic compound from which the functionality W of the unit (II) derives, according to a hydrosilylation mechanism (2nd stage), in the presence of a catalyst and preferably at a temperature of between 5 and 100°C.

**9.** Process according to claim 8, **characterized in that** the olefinic compound is added to the reaction medium before, during or after the dehydrogenation/condensation.

**10.** Process according to claim 8 or 9, **characterized in that** the starting polyorganosiloxane is selected from those corresponding to the following average formula:

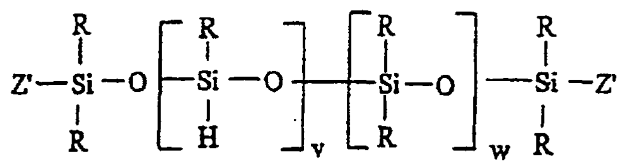

(VI)

in which:

- the R symbols are identical or different and are as defined in the key to the formula of the units (I) and (II), according to claim 1,
- the Z' symbols are identical or different and correspond to R or to hydrogen,
- v is an integer or a decimal number $\geq 0$ definable as follows: v = n + m + q; n, m and q corresponding to the definitions given above in the key of the formula (IV),

with the condition according to which, if v = 0, then $w \geq 1$ and the two Z' radicals correspond to hydrogen,

- w corresponds to the same definition as that of p given above in the key of the formula (IV), according to claim 3.

**11.** Process according to claim 8 or 9, **characterized in that** the starting polyorganosiloxane is selected from those corresponding to the following average formula:

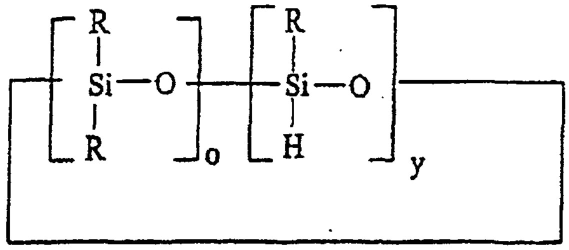

(VII)

in which:

- the R symbols are identical or different and are as defined in the key to the formula of the - units (I) and (II), according to claim 1,
- o corresponds to the same definition as that of u given above in the key of the formula (V), according to claim 5,
- y is an integer or a decimal number ≥ 0 definable as follows: y = r + s + t and y + u ≥ 3, r, s, t and u corresponding to the definitions given above in the key of the formula (V).

**12.** Process according to any one of claims 8 to 11, **characterized in that** the catalyst is chosen from those comprising at least one of the following elements: Pt, Rh, Ru, Pd, Ni and their combinations, this catalyst optionally being coupled to a support, which may or may not be inert.

**13.** Process according to any one of claims 8 to 12, **characterized in that** the dehydrogenation/condensation is carried out at a temperature of between 20 and 80°C.

**14.** Process according to any one of claims 8 to 13, **characterized in that** the hydrosilylation is carried out at a temperature of between 20 and 90°C.

**15.** Process according to any one of claims 8 to 14, **characterized in that** it is arranged for the hydrosilylation to be catalysed by at least a part of the dehydrogenation/condensation catalyst.

**16.** Functionalized polyorganosiloxane composed of a random, sequenced or block linear copolymer comprising, in the chain and/or at the chain end, on the one hand, alkoxy functional groups Y each connected to the silicon via an SiOC bond and, on the other hand, W functional groups, of hydrocarbon nature, each connected to the silicon via an SiC bond, the said polyorganosiloxane being **characterized in that** it is capable of being obtained by the process consisting:

- first, in reacting a starting polyorganosiloxane of formula:

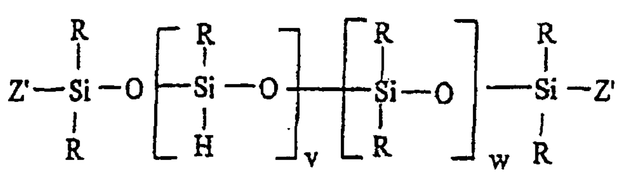

(VI)

in which:

- the R symbols are identical or different and are chosen from linear or branched alkyls having from 1 to 6 carbon atoms and/or from aryls,
- the Z' symbols are identical or different and correspond to R or to H,
- v is an integer or a decimal number $\geq 0$ with the conditions according to which:

  (1) $v = n + m + q$, n, m and q corresponding to the following definitions $0 \leq n \leq 100$, $0 \leq m \leq 100$ and $0 \leq q \leq 40$; and (2) if $v = 0$, then $w \geq 1$ and the two Z' radicals correspond to H,

- $0 \leq w \leq 20$,

with at least one alcohol of formula YH from which the functionality Y, which is chosen from the methoxy, ethoxy, propoxy and/or isopropoxy radicals, derives, the reaction being carried out in the presence of a catalyst, at least one of the active elements of which is chosen from the transition metals, according to a dehydrogenation/condensation mechanism, at a temperature of between 0 and 200°C; and

- secondly, in carrying out the addition of the polyorganosiloxane converted by dehydrogenation/
- condensation to at least one olefinic compound from which the functionality W derives, W having the same definition as that given above in claim 1 or 2, the addition being carried out according to a hydrosilylation mechanism in the presence of a catalyst and at a temperature of between 5 and 100°C.

**17.** Polyorganosiloxane according to claim 16, **characterized in that** the dehydrogenation/condensation catalyst is chosen from those comprising at least one of the following elements: Pt, Rh, Ru, Pd, Ni and their combinations, this catalyst optionally being coupled to a support, which may or may not be inert.

**18.** Polyorganosiloxane according to claim 16 or 17, **characterized in that** the dehydrogenation/condensation is carried out at a temperature of between 20 and 80°C.

**19.** Polyorganosiloxane according to any one of claims 16 to 18, **characterized in that** the hydrosilylation is carried out at a temperature of between 20 and 90°C.

**20.** Polyorganosiloxane according to any one of claims 16 to 19, **characterized in that** it is arranged for the hydrosilylation to be catalysed by at least a part of the dehydrogenation/condensation catalyst.

**21.** Application of the polyorganosiloxanes according to any one of claims 1 to 7 and/or of the polyorganosiloxanes obtained by the process according to any one of claims 8 to 15 and/or of the polyorganosiloxanes according to any one of claims 16 to 20 as antiadhesion modulators in silicone compositions.

**22.** Application of the polyorganosiloxanes according to any one of claims 1 to 7 and/or of the polyorganosiloxanes obtained by the process according to any one of claims 8 to 15 and/or of the polyorganosiloxanes according to any one of claims 16 to 20 as coating agents for a siliceous filler, for the purpose of promoting the use of silica in silicone elastomer compositions and of making it possible to strengthen the silicone elastomer products obtained from these compositions.